# EUROPEAN PATENT SPECIFICATION

(11) **EP 3 027 006 B1**
(45) Date of publication and mention of the grant of the patent: **30.08.2017**
(21) Application number: 14758684.6
(22) Date of filing: 30.07.2014
(51) Int. Cl.: B26D 1/24, B26D 1/18, A01K 5/00, A01F 29/00, A01F 25/20

(54) **AN APPARATUS FOR SEPERATNG FEED FOR LIVESTOCK**
VORRICHTUNG ZUR TRENNUNG VON VIEHFUTTER
APPAREIL DE SÉPARATION D'ALIMENTS DESTINÉS AU BÉTAIL

(30) Priority: 31.07.2013 NL 2011241
(43) Date of publication of application: 08.06.2016
(73) Proprietor: Trioliet Holding B.V., 7575 BE Oldenzaal (NL)
(72) Inventor: LIET, Cornelis Hendricus, NL-7581 TJ Losser (NL)
(74) Representative: De Vries & Metman
(86) International application number: PCT/NL2014/050528
(87) International publication number: WO 2015/016710

(56) References cited:
- EP-A1- 0 392 890
- FR-A1- 2 683 120
- US-A- 3 773 269
- US-A- 4 258 886

## Description

The invention is related to an apparatus for separating feed for livestock, such as feed from bales or blocks of silage, feed from a silo or other feed for livestock to be separated.

Feed for livestock, in particular loose forage such as silage may consist of grass, mixtures of grass and clover, grains such as wheat, barley or mixtures thereof or mixtures of grains with peas or beans. Silage that is compacted in a driving silage and which is separated is usually defined as 'blocks' whereas feed that is compacted in a baling press is usually defined as 'bales'. A layered structure arises upon compacting. Separating feed from a bale or block must be carried out such that the structure of the remaining portion of the block or the bale remains intact and does not crumble off in order to prevent oxygen from penetrating into the bale causing starting of decay processes.

An apparatus for separating feed for livestock from a stock of feed on a carriage is known from US 4,258,886. The apparatus comprises a rotating rotary cutter blade which can be moved along a cutting face. It also describes an embodiment having a second, horizontal rotary cutter blade, wherein the extreme points of both cutter blades are close to each other. In particular at the lower side of the rotary cutter blade that moves along the cutting face in such an apparatus the feed is not entirely separated. This causes a limited discharge of the separated strip of feed and may lead to jamming of the cutter blades since the feed may be wrapped around the shafts, particularly in case of types of feed having long stems. It is neither possible to obtain a fully smooth cutting face, particularly at the lower side of the cutting face. Especially in case of bales and blocks of silage the compacted structure of the feed may be broken causing rapidly decreasing quality of the feed close to the cutting face.

Feed that is provided to livestock usually consists of a plurality of components. In order to prepare a correct mixture different types of feed must be separated and subsequently mixed at a desired mixing ratio, possibly with concentrated feed. In order to obtain the correct composition of the mixture without spoiling feed the separating means must separate the correct amount of feed accurately.

The object of the present invention is to provide an apparatus for separating feed, such as for example feed from bales or blocks of silage from a silo or supplied via a supply station, wherein a smooth cutting face is obtained wherein the structure of the feed at the cutting face remain intact as much as possible so as to avoid loss of quality. Preferably, the separated feed may be metered accurately, wherein as little as possible feed is spoiled. Preferably, the apparatus must be energy-saving.

The object of the invention is achieved with an apparatus for separating feed for livestock along a cutting face, which apparatus is provided with at least two cutter blades which extend in a width direction of the cutting face and which are angled with respect to each other, as seen in side view, wherein at least one of the cutter blades has an end which crosses the plane of the other cutter blade, as seen in side view. Herein, the plane of the cutter blade means the geometric plane through the cutting edge of the cutter blade, which plane is transverse to the thickness direction of the cutter blade. For example, one of the cutter blades may project along an end of the other cutter blade such that the cutter blades are arranged in a T-shape, as seen in side view. It is also possible to arrange the cutter blades such that both cutter blades project with respect to each other, hence being arranged in X-shape, as seen in side view. In a T-shaped arrangement the cutter blades may be placed close to each other in horizontal direction of the cutting face. In particular in de X-shaped arrangement the cutter blades may engage at different points of engagement or locations of engagement at the cutting face. Herein, point of engagement means the location where the corresponding cutter blade cuts in a bale when this is placed in the operating range of the cutter blades.

Due to these features feed can be separated in amounts that can be determined accurately with a smooth cutting face, wherein the feed is discharged immediately after separating, such that the risk of jamming of the cutter blade, accumulation of feed on the cutter blade and spoiling of feed is reduced dramatically.

The cutter blades may consist of straight cutter blades, for example, possibly provided with a cutting edge including toothing. In a specific embodiment the cutter blades may consist of rotary cutter blades. A combination of one or more straight cutter blades with one or more rotary cutter blades may be used, as well.

In a specific embodiment the cutter blades may be moved along the cutting face through a guide. The cutter blades may be moved along the guide separately or together as a single cutting unit having a fixed mutual distance. For example, the guide may consist of a frame having a first, substantially horizontal guide, along which the cutter blades are displaceable in horizontal direction, and a second guide along which the cutter blades are moveable upwardly and downwardly. In this way the cutter blades are moveable along the whole cutting face.

The risk of uncontrolled crumble-off or later falling of feed from the cutting face can be reduced by adapting the guide such that the cutter blades are moved along a cutting face which is inclined backwardly. For example, the cutting face can be angled by 0 - 20 degrees with respect to the vertical, for example 2 - 15 degrees.

In order to reduce contact between the upper cutter blade and the cutting face further the upper cutter blade may be arranged at an angle ω with respect to the cutting face, as seen in top view. This angle, too, may be an angle of for example 0 - 12 degrees, for example 3 < ω < 9 degrees.

Both cutter blades may be driven separately or driven by means of the same drive means, for example with an adjustable rotational speed. The second cutter blade may be rotated faster, more slowly or at the same speed as the first cutter blade. The rotary cutter blades may rotate in opposite directions such that resulting reaction forces are neutralized.

In an embodiment the first cutter blade defines an acute angle β with respect to the cutting face, whereas the second cutter blade defines an obtuse angle δ with respect to a portion of the cutting face extending above the rotary cutter blade. Hence, the first cutter blade extends more or less upright along the cutting face having a substantially lying rotating shaft, whereas the second rotary cutter blade is arranged substantially lying having a rotating shaft which extends substantially upright. De mentioned acute angle may be β < 6 degrees, for example about 3 degrees.

The second cutter blade may be horizontal, for example, or define an angle γ with respect to the horizontal, for example, wherein the angle may have a value of for example 20 < γ < 30 degrees.

More specifically the cutter blades may be arranged such that a lower portion of the first cutter blade crosses a front portion of the second cutter blade, as seen in side view. For example, the front portion of the second cutter blade may project behind the first cutter blade across a distance of 0 < L1 < 5 cm, for example 1 < L1 < 2 cm, as seen in side view. The lower portion of the first cutter blade may project below the second cutter blade across a distance of 0 < L2 < 5 cm, for example 1 < L2 < 2 cm, as seen in side view. The crossing cuts of both cutter blades separate a strip of feed which subsequently can be loosened further, if necessary, and be discharged.

If both cutter blades are arranged as rotary cutter blades the shortest distance between the outer circumferences of both cutter blades may be at least 1 cm, for example, or more if desired.

Both rotary cutter blades may have about the same diameter. In an alternative embodiment both rotary cutter blades may have different sizes. For example, the lower rotary cutter blade may be larger than the upper rotary cutter blade, or vice versa.

For further guiding separated feed the cutter blades, particularly the upper cutter blade which is moved along the cutting face, may be provided with a guide member such as a flat disc or plate for retaining separated feed so as to prevent feed from being thrown away. For example, the disc or plate may be mounted on a drive shaft of the cutter blade and may be substantially parallel to the cutter blade, for example co-axial. The disc may be disposed at a distance from the cutter blade, which distance equals the thickness of the strips of feed to be separated. For example, such a disc may be mounted to a drive shaft of the upper cutter blade which is arranged as a rotary cutter blade. The disc may be circular or may have an alternative suitable circumference, such as square or polygonal. The disc may rotate together with the rotary cutter blade or being static or driven separately, for example in the same or in opposite direction of the rotary cutter blade, for example at the same speed of rotation or more slowly or faster.

The invention is also related to an apparatus for separating feed for livestock provided with a cutter blade, such as a rotary cutter blade, and a guide member, such as a disc or plate such as described hereinbefore, whether or not in combination with a second cutter blade.

For further loosening and discharging separated feed the cutter blades, in particular the lower cutter blade, may be mounted to a shaft provided with a discharge member. The discharge member may consist of a tapered or cylindrical drum or shaft provided with radial vanes. Alternative discharge members may be used as well, if desired.

In a specific embodiment the cutter blades consist of rotary cutter blades having ends which cross each other in a point at the cutting face, as seen in side view, having an upper rotary cutter blade which is moveable substantially along the cutting face and a lower rotary cutter blade, wherein the upper rotary cutter blade is mounted to a drive shaft which is provided with a circular or alternatively shaped disc which is substantially parallel and possibly co-axial to the upper cutter blade. The second, lower rotary cutter blade may be mounted to a drive shaft which is provided with a drum including vanes, for example.

The rotary cutter blades may be provided with a cutting edge or cutting teeth at the circumference. The rotary cutter blades may also consist of rotary blade saws.

In order to reduce the risk of jamming of the loosened feed at the toothing the upper rotary cutter blade may be arranged as a rotary blade saw having relatively short saw teeth. The saw teeth may project 8 mm or less with respect to the inner diameter of the toothing. The crest of the saw tooth cuts and pulls the feed to be cut. Short saw teeth cause a limited total pulling force, such that the saw does no longer jam rapidly. Preferably, the lengths of the teeth are such that at maximum rotational speed the net pulling force of all teeth together is such that the feed to be processed is pulled towards the saw without jamming of the saw in the feed. Since the saw pulls the feed towards itself the saw needs to exert a smaller force on a block or bale or different type of feed. In particular good results are achieved if the teeth project with respect to the circular circumference of the rotary blade saw which is continuously circular at least close to the saw teeth, or as a whole, i.e. without a wave pattern between the teeth such as usual in case of conventional rotary blade saw blades.

If a standard rotary blade saw blade including deeper toothing is used the lower portion of the toothing may be covered by means of a plate-shaped ring. In that case the ends of the teeth project with respect to the ring, for example 8 mm or less. For example, good results are achieved with teeth having a length of 3 - 4 mm.

The outer circumference of the ring effectively defines the inner diameter of the toothing. In order to keep the cutting force low such a ring may preferably be bevelled at the outer circumference. The ring may also be bevelled at the inner circumference. The invention is also related to such a saw as such, whether or not in combination with a second rotary cutter blade or rotary blade saw, and to an apparatus for separating feed for livestock, for example from blocks or bales, provided with such a rotary cutter blade and a guide for displacing the rotary cutter blade along a cutting face which is vertical or is inclined backwardly.

When the upper rotary cutter blade is moved along a cutting face and has separated the feed from the cutting face the rotary cutter blade can be moved in the direction of the cutting face in order to be moved again along another cutting face. The apparatus can be provided with wheels or being mounted to a rail guide, such as an upper guide. It is also possible that the feed is moved in the direction of the cutting unit, for example by means of a supply station having a conveyor belt on which blocks or bales of feed are placed.

The cutter blades may also be arranged as rotary cutter blades provided with a cutting edge having triangular projecting small cutter blades, for example made from a hard metal such as hard steel. For example, the small cutter blades may project in thickness direction with respect to the surface of the cutter blade that is directed to the cutting face.

The separated feed may then be transported to a stable or alternative feed location, for example by means of a controlled or self-propelled mixing carriage. The apparatus may be part of a controlled or self-propelled mixing carriage, for example.

The apparatus according to the invention may also be provided with a discharge conveyor for discharging separated feed to a mixing tank or mixing robot. The mixing tank or mixing robot and/or the discharge conveyor may be provided with weighing means for weighing separated feed. The apparatus may further be provided with a control unit, for example for controlling the cutter blades and/or the discharge conveyor. The control unit may be programmed such that the cutter blades are de-activated when the weighing means indicate that the amount of separated feed in the mixing tank and/or the amount of separated feed on the discharge conveyor equals a predetermined desired value, for example as one component out of a feed composition containing a plurality of components. The apparatus may comprise a supply station or two or more supply stations for supplying different types of feed to be mixed.

The invention will be elucidated by means of the drawings, in which some embodiments are shown by way of example.
Fig. 1: shows an embodiment of an apparatus according to the invention;
Fig. 2: shows a frontal view of a cutting unit of the apparatus of Fig. 1;
Fig. 3: shows a side view of a cutting unit of the apparatus of Fig. 1;
Fig. 4A: shows the crossing ends of the rotary cutter blades of a cutting unit of the apparatus of Fig. 1 in detail;
Fig. 4B: shows an alternative arrangement of the ends of the rotary cutter blades of a cutting unit of the apparatus of Fig. 1;
Fig. 4C: shows a further alternative arrangement of the ends of the rotary cutter blades of a cutting unit of the apparatus of Fig. 1;
Fig. 5: shows a side view of the apparatus of Fig. 1;
Fig. 6: shows a rotary cutter blade of the cutting unit of the apparatus of Fig. 1;
Fig. 7: shows cutting teeth of the rotary cutter blade of Fig. 6 in detail;
Fig. 8: shows a cross-section of a cutting tooth of Fig. 7;
Fig. 9: shows a detail of the rotary cutter blade of Fig. 6;
Fig. 10: shows a side view of an alternative embodiment of a cutting unit of an apparatus according to the invention schematically;
Fig. 11: shows a front view of an upper rotary cutter blade of the apparatus of Fig. 10;
Fig. 12: shows a side view of the cutter blade of Fig. 11;
Fig. 13: shows a part of a lower rotary cutter blade of the apparatus of Fig. 10;
Fig. 14: shows a further possible embodiment;
Fig. 15: shows a schematic top view of the apparatus of Fig. 14;
Fig. 16: shows a further possible embodiment of an apparatus according to the invention;
Fig. 17: shows a cutter blade of the apparatus of Fig. 16 in detail.

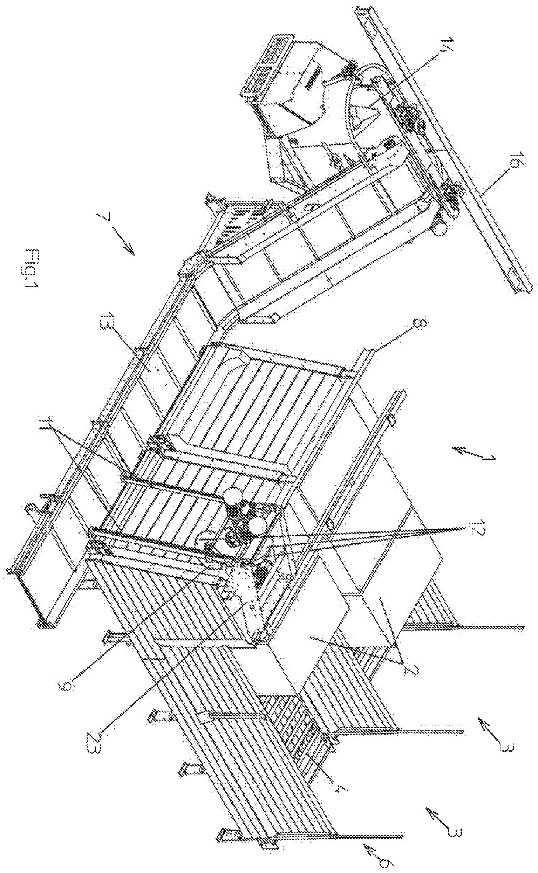

Fig. 1 shows an example of an apparatus 1 for separating, processing and mixing of forage, for example bales or blocks of silage 2 or loose forage. The apparatus 1 of Fig. 1 comprises a plurality of supply stations 3 which are provided with conveyors 4 on which bales or blocks of feed for livestock 2 to be processed are placed. The bales or blocks 2 are placed at a supply side 6 on the conveyors 4 and subsequently displaced towards a discharge side 7. At the discharge side 7 the apparatus 1 is provided with a horizontal guide 8 along the common width of both supply stations 3. A cutting unit 9 can be moved to and fro along the horizontal guide 8. The cutting unit 9 comprises a vertical second guide 11 and an assembly of two rotary cutter blades 12 which have the same size and which are movable upwardly and downwardly as a whole along the second guide 11, wherein the mutual orientation and position of the rotary cutter blades 12 remain the same. The vertical guide 11 defines an angle with respect to the vertical of about 15 degrees. In that way the rotary cutter blades 12 can be moved along a cutting face of a bale or block 2, which is inclined backwardly, at the discharge side 7 of the corresponding supply station 3.

Separated feed is received on a transverse conveyor 13 which discharges the feed to a mixing robot or mixing tank 14, in which the feed can be mixed with other feed components, for example, for example from blocks or bales 2 of a different supply station 3. In the embodiment as shown the mixing robot 14 is displaceable along a suspended rail 16. The mixing tank or mixing robot 14 may be provided with weighing means, for example.

The assembly of rotary cutter blades 12 may also be used in alternative arrangements, for example in arrangements having a single supply station or a plurality of supply stations, or arrangements wherein the blocks or bales are not placed on a supply station, but stationary on a flat, solid bottom, such as a floor or a pallet or such a stationary support means.

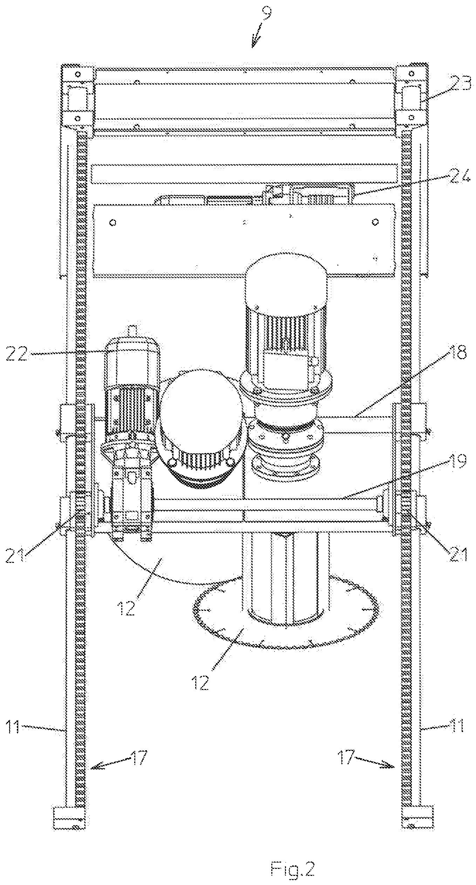

Fig. 2 shows a front view of the cutting unit 9. The vertical guide comprises two parallel posts 11, provided with a toothing 17. Both rotary cutter blades 12 are mounted to a frame 18 with a shaft 19 which is provided with pinions 21 at both ends. The shaft 19 is rotatably driven by an electric motor 22, wherein the pinions 21 are moved upwardly and downwardly along the toothing 17 of the posts 11. The cutting unit 9 further comprises an upper frame 23 including drive means 24 for moving it to and fro along the horizontal guide 8.

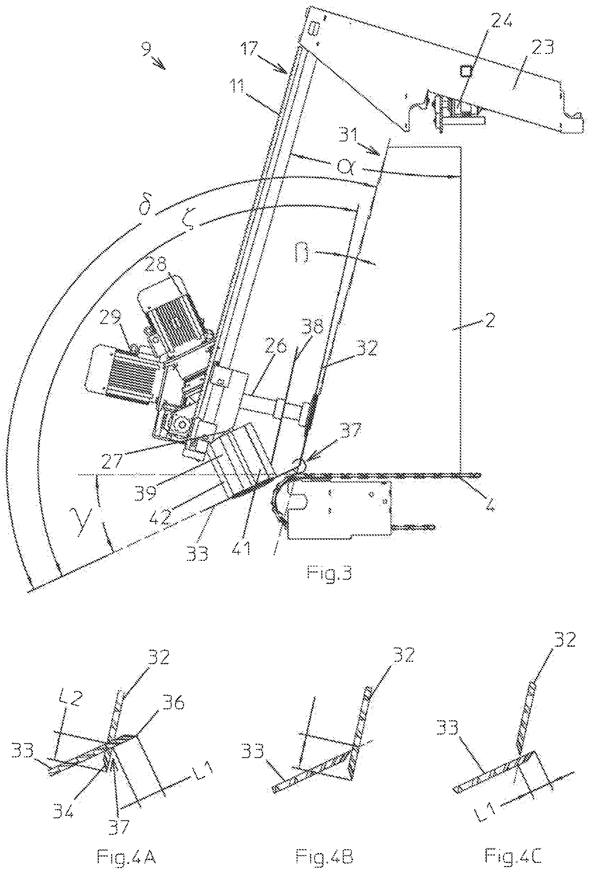

Both rotary cutter blades 12 are mounted to own drive shafts 26, 27, as shown in Fig. 3. Each of the drive shafts 26, 27 is driven separately by an electric motor 28, 29.

Fig. 3 shows a side view of the cutting unit 9. The vertical guide 11 is such that the rotary cutter blades 12 are moved via the guide 11 along a cutting face 31 of the block 2 which is inclined backwardly. In the embodiment as shown the cutting face 31 is inclined backwardly at an angle α of about 15 degrees.

The rotary cutter blades 12 comprise an upper rotary cutter blade 32, which extends parallel to the cutting face 31, thereby disregarding a clearance angle β, and a lower rotary cutter blade 33. As shown in detail in Fig. 4A a lower part 34 of the upper rotary cutter blade 32, as seen in side view, crosses a front part 36 of the second rotary cutter blade 33 in a point 37. During cutting feed this point 37 (which is just a point as seen in side view) is moved along the cutting face 31 of the corresponding bale or block 2. As shown in detail in Fig. 4A the front part 36 of the lower rotary cutter blade 33 projects behind the upper rotary cutter blade 32 across a distance L1, while the lower part 34 of the first rotary cutter blade 32 projects below the second rotary cutter blade 33 across a distance L2. In this way it forms an X-shape as a whole. Figs. 4B and 4C show alternative embodiments, wherein both cutter blades 32, 33 form a T-shape. In Fig. 4B the lower end of the upper cutter blade 32 projects below the lower cutter blade 33 across a distance L2. In Fig. 4C the front end of the lower cutter blade 33 projects behind the upper cutter blade 32 across a distance L1.

Fig. 3 further shows how the upper rotary cutter blade 32 defines a small clearance angle β with respect to the cutting face of, for example, about 3 degrees. The lower rotary cutter blade 33 defines an angle γ of about 25 degrees with the horizontal. The angle ζ between both rotary cutter blades 32, 33 is 127 degrees as seen in side view in the embodiment as shown.

As shown in Fig. 3 the lower rotary cutter blade 33 has a lower point of its track which lies at the level of the conveyor 4 of the supply station 3, such that only a smallest possible amount of remaining feed may accumulate there.

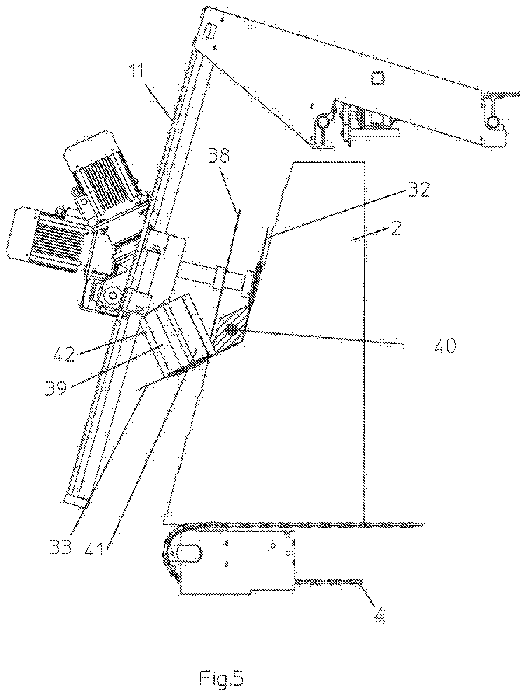

De drive shaft 26 of the upper rotary cutter blade 32 is provided with a disc 38 for guiding the feed that is separated. The disc 38 is substantially parallel and co-axial to the upper rotary cutter blade 32 and is circular having substantially the same diameter as the rotary cutter blade 32, for example. The distance between the disc 38 and the rotary cutter blade 32 is about the same as the thickness of the slice or strip of feed 40 to be cut, such as shown particularly in Fig. 5.

De drive shaft 27 of the lower rotary cutter blade 33 is provided with a discharge member 39 rotating at the same time. This discharge member 39 consists of a substantially cylindrical drum 41 which is provided with radial vanes or profiles 42. The diameter of the drum 41 is approximately half the diameter of the lower rotary cutter blade 33.

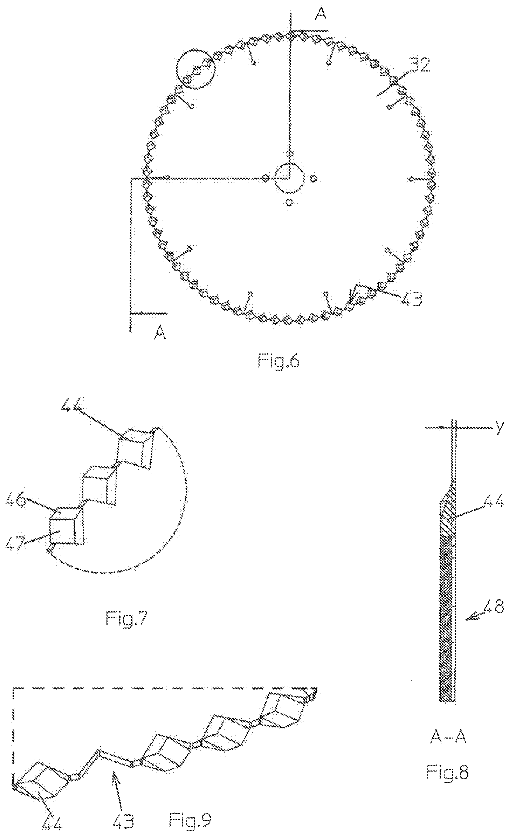

Fig. 6 shows the upper rotary cutter blade 32 separately. The rotary cutter blade 32 comprises a circular plate that is provided with triangular recesses 43 at its circumference, such as shown in greater detail in Figs. 7 and 8. Small cutter blades 44 are mounted in these recesses 43, for example made from hard metal, for example welded or soldered. The small cutter blades 44 project like triangles at the circumference of the rotary cutter blade 32. The projecting triangular portion comprises a sharp side 47 having a cutting angle of about 45 degrees and a back side 46.

Fig. 8 shows a cross-section along the line A-A in Fig. 6 of a part of the rotary cutter blade. It can be seen that the small cutter blades 44 project by a distance y with respect to the surface 48 of the rotary cutter blade 32 which faces the bale to be cut. This simplifies whetting or sharpening the small cutter blades 44.

The lower rotary cutter blade 33 may be shaped in a similar way. In the embodiment as shown the lower rotary cutter blade 33 is driven separately, for example in a direction of rotation which is opposite to the direction of rotation of the upper rotary cutter blade. In an alternative embodiment the lower cutter blade 33 may be driven in the same direction of rotation as the upper cutter blade 32, or being static or being freely rotatable, without driving.

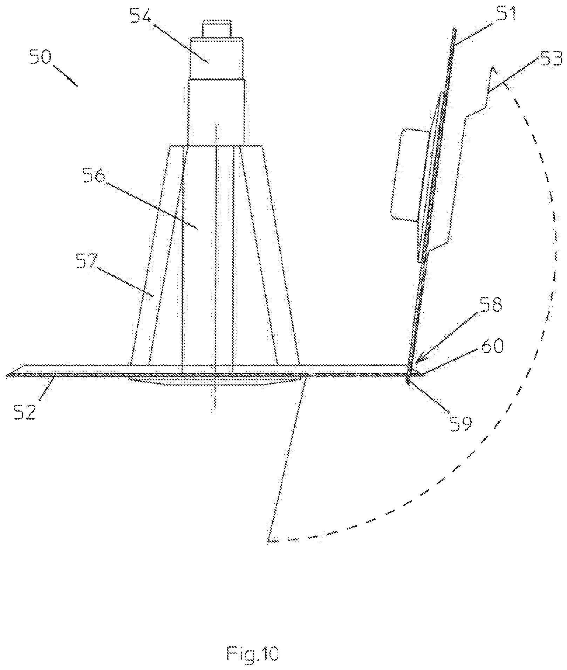

Fig. 10 shows an alternative embodiment of a cutting unit 50 schematically. This embodiment comprises two rotary cutter blades, an upper rotary cutter blade 51 which is arranged as rotary blade saw and a lower rotary cutter blade 52 for discharging separated feed. The upper cutter blade 51 has a clearance angle of about 3 degrees with respect to the cutting face 53 of a bale to be cut. The lower cutter blade 52 is substantially horizontal and is mounted to the end of a drive shaft 54 about which a tapered drum 56 including vertical vanes 57 is mounted. Both cutter blades cross each other in a point 58 on the cutting face, as seen in side view. The shortest distance between the outer circumferences of both cutter blades is about 1-4 cm, for example. The ends 59, 60 of both cutter blades 51, 52 project about 1.5 cm behind the point 58.

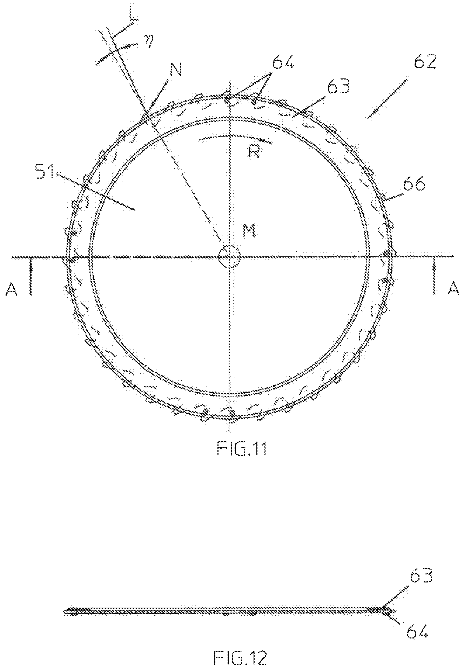

The upper cutter blade 51 of this embodiment is arranged as a rotary blade saw, which is shown in greater detail in Figs. 11 and 12. The saw 51 is a standard circular saw blade including a saw edge 62 which is provided with a toothing. The conventional toothing (shown as dotted line) with saw teeth is covered by a flat ring 63 including bevelled inner and outer sides. The flat ring 63 is mounted on the saw blade by bolts 64. The crests of the saw teeth 66 are provided with cutting edges which project away from below the flat ring 63 at a desired length, possibly adjustable. Due to the short tooth length the risk of jamming of the saw is reduced dramatically or even eliminated.

The cutting teeth are inclined forwardly as seen in the direction of rotation R, such that the angle η between the extension L of the cutting edge 42 and the radial line between the centre point M of the saw blade and the extreme angular point N of the saw tooth is an acute angle, for example an angle of 0 - 25 degrees.

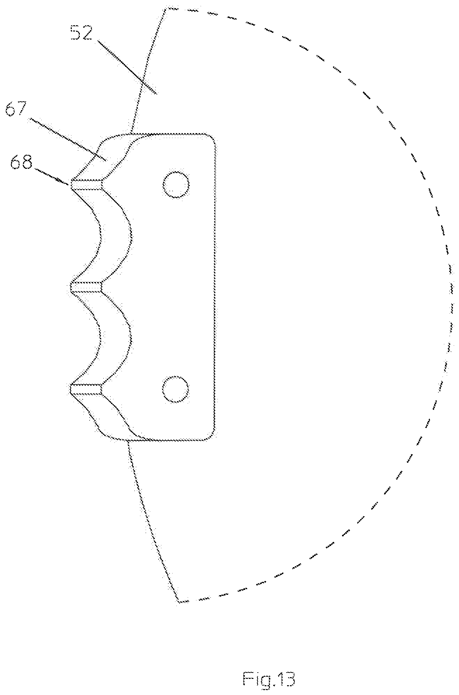

Fig. 13 shows a detail of the lower rotary cutter blade 52 which has a circular circumference along which small cutter blades 67 including toothing 68 at mutual distance are applied.

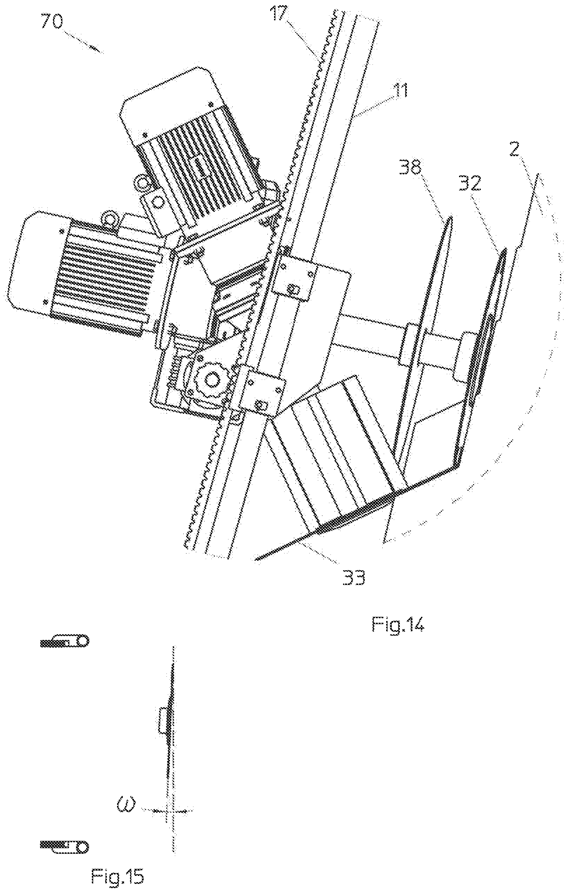

Fig. 14 shows an embodiment 70 which is essentially the same as the embodiment of Fig. 1, but different in that the upper rotary cutter blade 32 also defines a clearance angle ω with respect to the cutting face as seen in top view, for example an angle of 0 < ω < 12 degrees. This is shown schematically in top view in Fig. 15.

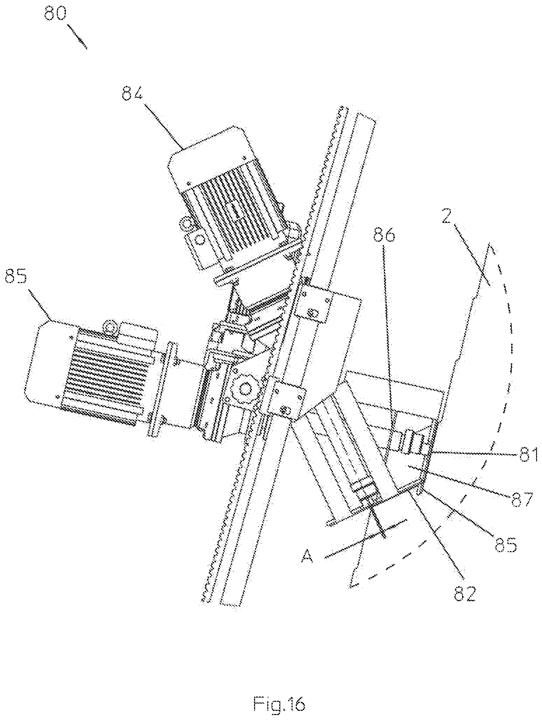

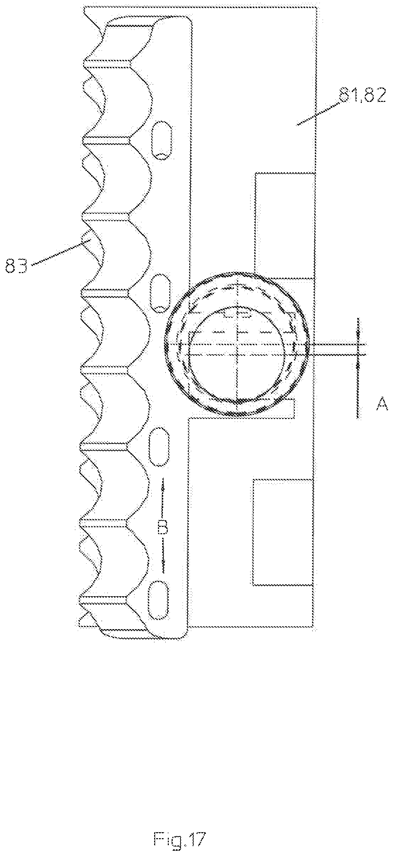

Fig. 16 shows still another possible embodiment 80, which is the same as the embodiment of Fig. 1, but wherein the cutter blades consist of straight cutter blades 81, 82, provided with a toothing 83 as shown in Fig. 17. The end 85 of the upper cutter blade 81 projects downwardly with respect to the lower cutter blade 82. In this way both cutter blades create a T-shape, as seen in side view. In still another embodiment the end of the lower cutter blade 82 may project with respect to the lower end of the upper cutter blade 81, as seen in side view. The ends of both cutter blades may cross each other in side view and create an X-shape, as well.

The cutter blades may stand still or moved to and fro by means of driving the electric motors 84, 85 or an alternative suitable drive means. A parallel disc-shaped guiding member 86 for guiding the separated strip of feed 87 is disposed at a side of the upper cutter blade 81 directed away from the cutting face.

## Claims

1. An apparatus (1) for separating feed for livestock along a cutting face, the apparatus being provided with at least two cutter blades (12) which extend in a width direction of the cutting face and which are angled with respect to each other as seen in side view, **characterised in that** at least one of the cutter blades has an end which crosses the plane of the other cutter blade as seen in side view.

2. An apparatus according to claim 1, wherein the cutter blades engage at different locations of engagement on the cutting face, which are disposed at horizontal distance from each other.

3. An apparatus according to claim 2, wherein ends of the cutter blades cross each other in a point at the cutting face.

4. An apparatus according to claim 1, 2 or 3, wherein at least one of the cutter blades consists of rotary cutter blades.

5. An apparatus according to one of the preceding claims, wherein the cutter blades are movable together along a guide along the cutting face at a fixed mutual distance from each other.

6. An apparatus according to one of the preceding claims, wherein the first cutter blade defines an acute angle β with respect to the cutting face and wherein the second rotary cutter blade defines an obtuse angle δ with respect to a portion of the cutting face extending above the cutter blade.

7. An apparatus according to claim 6, wherein the second rotary cutter blade defines an angle γ with respect to the horizontal, wherein 20 < γ < 30 degrees.

8. An apparatus according to one of the preceding claims, wherein a lower portion of the first cutter blade crosses a front portion of the second cutter blade as seen in side view.

9. An apparatus according to claim 8, wherein the front portion of the second cutter blade projects behind the first cutter blade across a distance of 0 < L1 < 5 cm, for example 1 < L1 < 2 cm, as seen in side view.

10. An apparatus according to claim 8 or 9, wherein the lower portion of the first cutter blade projects below the second cutter blade across a distance of 0 < L2 < 5 cm, for example 1 < L2 < 2 cm, as seen in side view.

11. An apparatus according to one of the preceding claims, wherein one of the cutter blades is an upper cutter blade extending along the cutting face and defining an angle of 0 < ω < 12 degrees with respect to the cutting face, as seen in top view.

12. An apparatus according to one of the preceding claims, wherein the cutter blades consist of rotary cutter blades, of which at least one of the rotary cutter blades is provided with a discharge member. (39)

13. An apparatus according to claim 12, wherein the discharge member comprises a cylindrical or tapered drum (41) which is provided with vanes, for example radial vanes. (42).

14. An apparatus according to one of the preceding claims, wherein the cutter blade, preferably a rotary cutter blade, is provided with cutting teeth which project at most 8 mm.

15. An apparatus according to one of the preceding claims, wherein at least one of both cutter blades at the cutting edge is provided with small cutter blades, (44). preferably made from a hard metal, which project in thickness direction with respect to the surface of the cutter blade that is directed to the cutting face.

## Patentansprüche

1. Vorrichtung (1) zur Trennung von Viehfutter entlang einer Schneidefläche, wobei die Vorrichtung mit mindestens zwei Schneideblättern (11) versehen ist, die sich in eine Breitenrichtung der Schneidefläche erstrecken und die zueinander in einem Winkel angeordnet sind, wenn in einer Seitenansicht betrachtet,
**dadurch gekennzeichnet, dass** mindestens eines der Schneideblätter ein Ende hat, das die Ebene des anderen Schneideblatts kreuzt, wenn in einer Seitenansicht betrachtet.

2. Vorrichtung nach Anspruch 1, wobei die Schneideblätter an unterschiedlichen Eingriffsorten, die in einem horizontalen Abstand voneinander angeordnet sind, an der Schneidefläche im Eingriff sind.

3. Vorrichtung nach Anspruch 2, wobei Enden der Schneideblätter sich in einem Punkt an der Schneidefläche kreuzen.

4. Vorrichtung nach Anspruch 1, 2 oder 3, wobei mindestens eines der Schneideblätter aus einem rotierenden Schneideblatt besteht.

5. Vorrichtung nach einem der vorstehenden Ansprüche, wobei die Schneideblätter gemeinsam und mit einem gleichbleibenden gegenseitigen Abstand entlang einer Führung entlang der Schneidefläche bewegbar sind.

6. Vorrichtung nach einem der vorstehenden Ansprüche, wobei das erste Schneideblatt einen spitzen Winkel β bezüglich der Schneidefläche definiert und wobei das zweite rotierende Schneideblatt einen stumpfen Winkel δ bezüglich eines sich oberhalb des Schneideblatts erstreckenden Teils der Schneidefläche definiert.

7. Vorrichtung nach Anspruch 6, wobei das zweite rotierende Schneideblatt einen Winkel γ bezüglich der Horizontalen definiert, wobei 20 < γ < 30 Grad.

8. Vorrichtung nach einem der vorstehenden Ansprüche, wobei ein unterer Teil des ersten Schneideblatts einen vorderen Teil des zweiten Schneideblatts kreuzt, wenn in einer Seitenansicht betrachtet.

9. Vorrichtung nach Anspruch 8, wobei der vordere Teil des zweiten Schneideblatts hinter das erste Schneideblatt über eine Strecke von 0 < L1 < 5cm, zum Beispiel 1 < L1 < 2cm, vorspringt, wenn in einer Seitenansicht betrachtet.

10. Vorrichtung nach Anspruch 8 oder 9, wobei der untere Teil des ersten Schneideblatts unterhalb des zweiten Schneideblatts über eine Strecke von 0 < L2 < 5cm, zum Beispiel 1 < L2 < 2cm, vorspringt, wenn in einer Seitenansicht betrachtet.

11. Vorrichtung nach einem der vorstehenden Ansprüche, wobei eines der Schneideblätter ein oberes Schneideblatt ist, das sich entlang der Schneidefläche erstreckt und einen Winkel von 0 < ω < 12 Grad bezüglich der Schneidefläche definiert, wenn von oben aus betrachtet.

12. Vorrichtung nach einem der vorstehenden Ansprüche, wobei die Schneideblätter aus rotierenden Schneideblättern bestehen, wobei mindestens eines der rotierenden Schneideblätter mit einem Ausgabeelement (39) versehen ist.

13. Vorrichtung nach Anspruch 12, wobei das Ausgabeelement eine zylindrische oder konische Trommel (41) aufweist, die mit Schaufeln, zum Beispiel radialen Schaufeln, (42) versehen ist.

14. Vorrichtung nach einem der vorstehenden Ansprüche, wobei das Schneideblatt, vorzugsweise ein rotierendes Schneideblatt, mit Schneidezähnen versehen ist, die maximal 8mm vorspringen.

15. Vorrichtung nach einem der vorstehenden Ansprüche, wobei mindestens eines der beiden Schneideblättern an der Schneidekante mit kleinen Schneideblättern (44) versehen ist, die vorzugsweise aus einem harten Material hergestellt sind und die in Dickenrichtung bezüglich der zu der Schneidefläche gerichteten Oberfläche des Schneideblatts vorspringen.

## Revendications

1. Appareil (1) pour séparer des aliments pour le bétail suivant une face de coupe, l'appareil étant pourvu d'au moins deux lames d'outil à coupe (12) qui s'étendent dans une direction de la largeur de la face de coupe et qui forment un angle les unes par rapport aux autres en vue de côté, **caractérisé en ce qu'**au moins l'une des lames d'outil à coupe a une extrémité qui coupe le plan de l'autre lame d'outil à coupe en vue de côté.

2. Appareil selon la revendication 1, dans lequel les lames d'outil à coupe viennent en prise à différents emplacements de mise en prise de la face de coupe, qui sont disposés à une distance horizontale les uns des autres.

3. Appareil selon la revendication 2, dans lequel des extrémités des lames d'outil à coupe se croisent en un point au niveau de la face de coupe.

4. Appareil selon la revendication 1, 2 ou 3, dans lequel au moins l'une des lames d'outil à coupe consiste en des lames d'outil à coupe rotatives.

5. Appareil selon l'une des revendications précédentes, dans lequel les lames d'outil à coupe sont mobiles ensemble suivant un guide le long de la face de coupe à une distance mutuelle fixe les unes des autres.

6. Appareil selon l'une des revendications précédentes, dans lequel la première lame d'outil à coupe définit un angle aigu β par rapport à la face de coupe et dans lequel la seconde lame de coupe rotative définit un angle obtus δ par rapport à une portion de la face de coupe s'étendant au-dessus de la lame d'outil à coupe.

7. Appareil selon la revendication 6, dans lequel la seconde lame d'outil à coupe rotative définit un angle γ par rapport à l'horizontale, dans lequel 20 < γ < 30 degrés.

8. Appareil selon l'une des revendications précédentes, dans lequel une portion inférieure de la première lame d'outil à coupe coupe une portion avant de la seconde lame d'outil à coupe en vue de côté.

9. Appareil selon la revendication 8, dans lequel la portion avant de la seconde lame d'outil à coupe fait saillie derrière la première lame d'outil à coupe sur une distance de 0 < L1 < 5 cm, par exemple 1 < L1 < 2cm, en vue de côté.

10. Appareil selon la revendication 8 ou 9, dans lequel la portion inférieure de la première lame d'outil à coupe fait saillie en dessous de la seconde lame d'outil à coupe sur une distance de 0 < L2 < 5 cm, par exemple 1 < L2 < 2 cm, en vue de côté.

11. Appareil selon l'une des revendications précédentes, dans lequel l'une des lames d'outil à coupe est une lame d'outil à coupe supérieure s'étendant le long de la face de coupe et définissant un angle de 0 < ω < 12 degrés par rapport à la face de coupe, en vue de dessus.

12. Appareil selon l'une des revendications précédentes, dans lequel les lames d'outil à coupe consistent en des lames d'outil à coupe rotatives, au moins l'une des lames d'outil à coupe rotatives étant pourvue d'un organe d'évacuation (39).

13. Appareil selon la revendication 12, dans lequel l'organe d'évacuation comprend un tambour cylindrique ou conique (41) qui est pourvu d'aubes, par exemple d'aubes radiales (42).

14. Appareil selon l'une des revendications précédentes, dans lequel la lame d'outil à coupe, de préférence une lame d'outil à coupe rotative, est pourvue de dents de coupe qui font saillie de 8 mm au plus.

15. Appareil selon l'une des revendications précédentes, dans lequel au moins l'une des deux lames d'outil à coupe au niveau du bord de coupe est pourvue de petites lames d'outil à coupe (44), de préférence faites à partir d'un métal dur, qui fait saillie dans la direction de l'épaisseur par rapport à la surface de la lame d'outil à coupe qui est orientée vers la face de coupe.
